# EUROPÄISCHE PATENTSCHRIFT

(11) **EP 1 415 492 B1**
(45) Veröffentlichungstag und Bekanntmachung des Hinweises auf die Patenterteilung: **21.09.2005**
(21) Anmeldenummer: 02754934.4
(22) Anmeldetag: 24.07.2002
(51) Int. Cl.: H04Q 7/34

(54) **VERFAHREN ZUM SCHNELLEN UND LOKALEN FEHLERBEHEBEN BEIM AUSFALL EINZELNER PHYSIKALISCHER VERBINDUNGEN IN GEBÜNDELTEN KOMMUNIKATIONSVERBINDUNGEN UND KOMMUNIKATIONSSYSTEM-VORRICHTUNG ZUM DURCHFÜHREN DES VERFAHRENS**
METHOD FOR FAST AND LOCAL ERROR CORRECTION IN THE EVENT OF THE FAILURE OF INDIVIDUAL PHYSICAL CONNECTIONS IN BUNDLED COMMUNICATION CONNECTIONS AND COMMUNICATION SYSTEM DEVICE FOR CARRYING OUT THE METHOD
PROCEDE DE CORRECTION D'ERREUR RAPIDE ET LOCALE EN CAS DE DEFAILLANCE DE LIAISONS PHYSIQUES INDIVIDUELLES DANS DES LIAISONS DE TELECOMMUNICATION EN PAQUETS, ET DISPOSITIF A SYSTEME DE TELECOMMUNICATION POUR LA MISE EN OEUVRE DE CE PROCEDE

(30) Priorität: 10.08.2001 DE 10139385; 10.08.2001 EP 01119365
(43) Veröffentlichungstag der Anmeldung: 06.05.2004
(73) Patentinhaber: SIEMENS AKTIENGESELLSCHAFT, 80333 München (DE)
(72) Erfinder: WALDHAUSER, Richard, 81249 München (DE); DAUERER, Jörg, 82194 Gröbenzell (DE)
(86) Internationale Anmeldenummer: PCT/EP2002/008263
(87) Internationale Veröffentlichungsnummer: WO 2003/015436

(56) Entgegenhaltungen:
- US-A- 5 757 810

## Beschreibung

Die Erfindung bezieht sich auf ein Verfahren zum Fehlerbeheben beim Ausfall einzelner physikalischer Verbindungen in Kommunikationsverbindungen mit mehreren physikalischen Verbindungen zwischen zwei Stationen gemäß den oberbegrifflichen Merkmalen des Patentanspruchs 1 bzw. eine Kommunikationssystemvorrichtung zum Durchführen eines solchen Verfahrens. Ein solches Verfahren und eine solche Kommunikationssystemvorrichtung sind aus dem Dokument US-5,757,810 bekannt.

Bei modernen Kommunikationssystemen, beispielsweise dem Internet oder Funk-Telekommunikationssystemen gemäß GSM (Global System for Mobile Communication) oder UMTS (Universal Mobile Telecommunication System) werden Daten und Informationen zwischen einzelnen Stationen über physikalische Verbindungen übertragen. Physikalische Verbindungen sind dabei leitungsgebundene Schnittstellen oder Funkschnittstellen.

Bei modernen Kommunikationssystemen werden aus Gründen der Erhöhung der übertragungskapazität bei einer Datenübertragung häufig mehrere Leitungen parallel betrieben. Dazu werden die Daten aufgeteilt und über entsprechend gebündelte Leitungen bzw. physikalische Verbindungen übertragen. Diesbezügliche Verfahren bei der Übertragung von entsprechenden Datenzellen oder Datenpaketen sind unter IMA (Inverse Multiplexing) bei ATM-Datentransfer (ATM: Asynchronous Transfer Mode) oder ML PPP (Multi Link Point to Point Protokoll / Mehrverbindungs-Punkt-zu-Punkt-Protokoll) bei IP-Datentransfer (IP: Internet Protokoll) allgemein bekannt.

Bei diesen Verfahren wird der Datenfluss auf mehrere physikalische Leitungen verteilt. Nachteilhaft ist, dass schwerwiegende Fehler auftreten, sobald auch nur eine einzige Leitung eines entsprechenden Leitungsbündels defekt ist. Entsprechend müssen Leitungsausfälle unverzüglich festgestellt und entsprechende Maßnahmen eingeleitet werden, um einen großen Datenverlust zu vermeiden. Bei den gängigen Verfahren zur Übertragung von Paket- oder Zell-Daten über mehrere physikalische Leitungen gibt es entweder keine Fehlerbehebungsmechanismen, z. B. bei ML PPP, oder diese Mechanismen sind sehr komplex, wie bei IMA bei ATM-Datenübertragungen. Bei IMA werden Signalisierungsmeldungen immer über alle gebündelten Leitungen geleitet. Dies bedingt eine entsprechend hohe Datenmenge, die insgesamt für Signalisierungsmeldungen zu übertragen und zu verarbeiten ist. Außerdem ist der Aufbau der entsprechenden Vorrichtungsbausteine sehr komplex.

Zur Erkennung von Fehlern weisen die gängigen physikalischen Schichten bzw. Ebenen entsprechende Erkennungsmechanismen auf. Nach dem Erkennen eines Fehlers können entsprechende Nachrichten an zentrale Einrichtungen des Kommunikationssystems übermittelt werden, woraufhin von den zentralen Einrichtungen, z.B. einem Betriebs- und Wartungszentrum (OMC - Operation and Maintenance Center), die Verteilung der Daten über die fehlerhaften Verbindungen eingestellt werden kann. Diese Vorgehensweise ist durch die erforderliche Übertragung von entsprechenden Nachrichten und deren Verarbeitung aufwendig und beansprucht eine relativ lange Zeit, während der weiterhin Daten auf die defekte physikalische Verbindung gesendet werden.

Die Aufgabe der Erfindung besteht darin, ein Verfahren zum Beheben von Fehlern auf physikalischen Verbindungen bei gebündelten Verbindungen einzuführen bzw. zu vereinfachen.

Diese Aufgabe wird durch ein Verfahren zum Beheben von Fehlern auf einzelnen physikalischen Verbindungen bei Kommunikationsverbindungen mit den Merkmalen des Patentanspruchs 1 bzw. eine Kommunikationssystem-Vorrichtung mit den Merkmalen des Patentanspruchs 7 gelöst.

Vorteilhafte Ausgestaltungen sind Gegenstand von abhängigen Ansprüchen.

Das Herausnehmen einzelner defekter Verbindungen bzw. Leitungen eines Leitungsbündels bereits eigenständig von einer oder beiden Stationen an einer Schnittstelle durchzuführen bietet eine Vielzahl von Vorteilen. Eine aufwendige Signalisierung eines erkannten Fehlers von den Stationen zu einer oder mehreren entsprechenden übergeordneten Kommunikationssystemeinrichtungen ist nicht erforderlich oder lediglich zur Mitteilung des Fehlers und der durchgeführten Maßnahmen seitens der Station selber notwendig. Entsprechend reduziert sich der Signalisierungs- und Verwaltungsaufwand sowohl bei den betroffenen schnittstellenseitigen Stationen als auch bei den zentralen Einrichtungen. Außerdem kann eine weitere Benutzung der entsprechend als defekt erkannten physikalischen Verbindung schnellstmöglich durch die betroffenen schnittstellenseitigen Stationen unterbunden werden, so dass innerhalb kürzester Zeit eine weitere Versendung von Daten auf defekte physikalische Verbindungen unterbunden werden kann, was einen Datenverlust und/oder erneut zu übertragene Daten verringert. Ohne einen Zusammenbruch des Protokolls kann eine weitere Verwendung der restlichen, nicht fehlerhaften physikalischen Verbindungen des Bündels durchgeführt werden, wobei im Falle noch freier physikalischer Verbindungen letztere dem Bündel aus Verbindungen hinzugefügt werden. Während Funktionen auf höheren Schichten unbeeinflusst funktionieren, sorgen die Funktionen auf den untersten Schichten somit für eine schnelle und effiziente Fehlerbehandlung.

Ein Ausführungsbeispiel wird nachfolgend anhand der Zeichnung näher erläutert. Es zeigen:
Fig. 1 zwei Kommunikationssystemvorrichtungen mit einer da-zwischen befindlichen Verbindung und
Fig. 2 schematisch ein Diagramm der betroffenen Protokollschichten in diesen Kommunikationssystemsvorrichtun-gen.

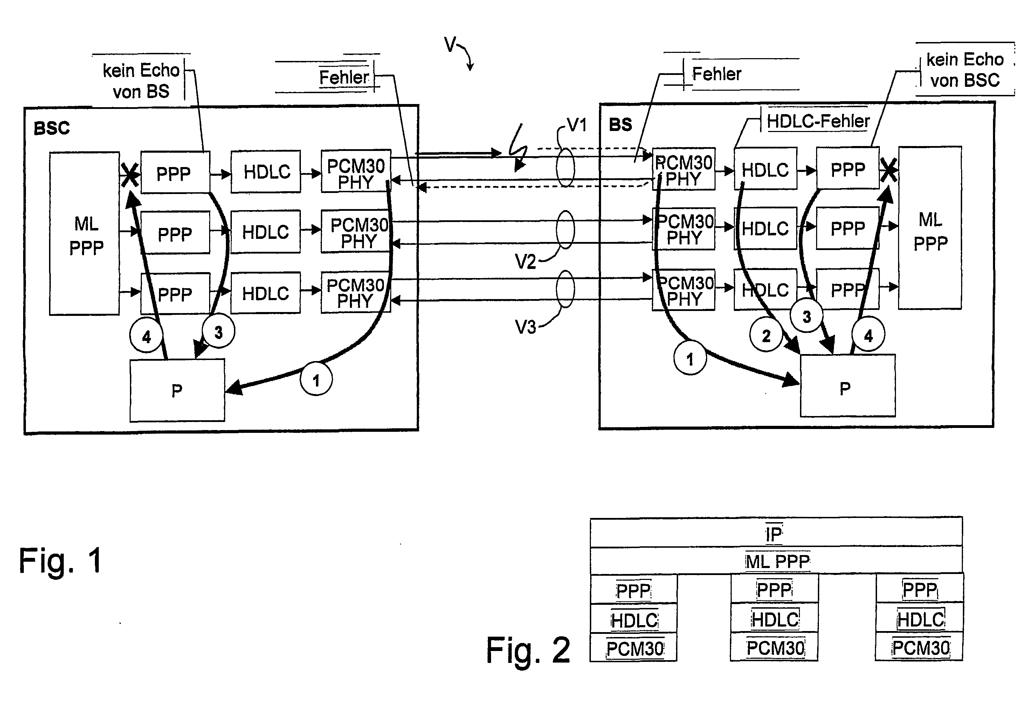

Wie aus Fig. 1 ersichtlich, bestehen zwischen einzelnen Einrichtungen eines Kommunikationssystems, z. B. gemäß dem GSM, Schnittstellen V zur Übertragung von Daten und Informationen. Diese Schnittstellen können sowohl kabelgebunden als auch als Funk-Schnittstellen ausgebildet sein.

Bei den beiden dargestellten Kommunikationssystemvorrichtungen handelt es sich beispielsweise um eine Basisstation BS und eine Basisstations-Steuereinrichtung BSC, die über die Schnittstelle V Daten und Informationen untereinander austauschen. Weitere Verbindungen können zwischen diesen Stationen bzw. Einrichtungen BSC, BS und weiteren Einrichtungen des Kommunikationssystems GSM bestehen, sind jedoch zur Vereinfachung nicht dargestellt. Eine solche weitere Einrichtung kann beispielsweise eine übergeordnete Steuereinrichtung sein, wie sie in den derzeitigen Kommunikationssystemen zur umfassenden Steuerung bekannt sind.

Die beiden dargestellten Kommunikationssystemvorrichtungen BSC, BS weisen ihrerseits jeweils eine Vielzahl von Einrichtungen zum Betrieb der Schnittstelle auf, wobei wiederum nur ein hier nachfolgend besonders interessierender Teil dargestellt ist. Von einem Prozessor P werden die entsprechenden Einrichtungen und Protokollschichten gesteuert und verwaltet, insbesondere auch Module, die als Hardware und/oder als Software bereitgestellt sind.

Beim dargestellten Ausführungsbeispiel besteht die Schnittstelle V aus drei physikalischen Leitungen bzw. Schnittstellen, über die entsprechende physikalische Verbindungen V1, V2 bzw. V3 aufgebaut werden können. In beiden Kommunikationssystemvorrichtungen BSC, BS befinden sich zum Steuern und Verwalten dieser einzelnen physikalischen Leitungen PCM30-PHY-Module zum Verwalten der physikalischen Schicht bzw. Ebene PCM30 PHY. Jedem dieser PCM30-Module zum Steuern und Verwalten der physikalischen Ebene PCM30 PHY ist jeweils ein HDLC-Modul zum Delinearisieren der zu übertragenden Pakete (HDLC: High-Level Data Link Control) zugeordnet. Während die erstgenannten Module in der Regel der Ebene 1 zugeordnet sind, können die letztgenannten Module der Ebene 1 oder bereits der Ebene 2 zugeordnet sein. Den HDLC-Modulen sind jeweils PPP-Module zum Steuern und Verwalten von Punkt-zu-Punkt-Verbindungen zugeordnet. Diese sind in der Regel der Ebene 2 (Layer 2) zugeordnet. Den einzelnen PPP-Modulen für die einzelnen Verbindungen V1-V3 ist ein ML PPP-Modul übergeordnet, das eine Aufteilung von Daten auf die verschiedenen Verbindungen V1-V3 bzw. eine Verwaltung von über diese verschiedenen Verbindungen V1-V3 eintreffenden Daten durchführt. Insbesondere wird in diesem Modul auch die Verteilung der Daten auf die einzelnen Leitungen V1-V3 vorgenommen.

Wie auch aus Fig. 2 ersichtlich, besteht somit in den beiden Kommunikationssystemvorrichtungen BSC, BS eine Verwaltung verschiedener Protokollschichten, wobei die drei unteren Elemente PCM30, HDLC, PPP jeweils einer der physikalischen Verbindungen V1-V3 zugeordnet sind, während die weiteren Elemente ML PPP und darüber IP jeweils der Schnittstelle V insgesamt zugeordnet sind. Die Zuteilung dieser einzelnen Elemente zu den verschiedenen Schichten bzw. Layern sind abhängig vom jeweiligen Kommunikationssystem.

Nachfolgend wird die Verfahrensweise bei einem bevorzugten Verfahren zum Erkennen und Behandeln von Fehlern auf einer oder mehreren physikalischen Verbindungen V1-V3 der gebündelten Schnittstelle V beschrieben. Ziel ist dabei eine lokal autonome Erkennung und Behandlung von Fehlern innerhalb jeder einzelnen der Kommunikationssystemvorrichtungen BSC bzw. BS, zwischen denen die Schnittstelle V besteht.

Um eine möglichst schnelle Fehlererkennung zu realisieren, sollte die Fehlererkennung auf der untersten Protokollschicht (physical layer) erfolgen. Gängige Protokollschichten/Physical Layer, wie z. B. PCM30 (Pulse Code Modulation) oder STM-1 (STM-1: Synchronous Transfer Mode), verfügen über entsprechende Fehlererkennungsmechanismen. Mit Hilfe dieser Fehlererkennungsmechanismen kann ein Leitungsfehler auf einer einzelnen physikalischen Leitung V1 auf beiden Seiten der Schnittstelle V in den entsprechenden Kommunikationssystemvorrichtungen BSC bzw. BS unabhängig voneinander und praktisch gleichzeitig erkannt werden. Das beiderseitige Erkennen des Leitungsfehlers ist besonders vorteilhaft, da bei einer defekten Leitung bzw. Verbindung V1 nicht mehr sichergestellt werden kann, dass eine den Fehler erkennende Kommunikationsvorrichtung BS der Kommunikationssystemvorrichtung auf der anderen Seite der Übertragungsstrecke bzw. Verbindung V noch mitteilen kann, dass sie einen Fehler erkannt hat. Wie bereits festgestellt, werden bei IMA zur Vermeidung dieses Problems alle diesbezüglichen Meldungen über alle am Bündel beteiligten Leitungen bzw. Verbindungen V1-V3 gesendet, was jedoch zur nachteilhaft großen Komplexität von IMA beiträgt und hier vermieden werden sollte.

Zusätzlich oder alternativ bieten auch Protokolle der Schicht 2 im allgemeinen ebenfalls einen Fehlererkennungsmechanismus an. Im Falle von PPP über HDLC ist dies beispielsweise eine Prüfsumme (HDLC-Checksum) und PPP-Echo-Nachrichten bzw. PPP-Echo-Messages. Bei ATM ist entsprechend ein HEC-Feld (HEC: Header Error Checksum) der ATM-Zellen vorgesehen.

Beide vorstehend beschriebene Fehlererkennungsmechanismen stehen unabhängig voneinander in den Kommunikationssystemvorrichtungen zur Verfügung, wobei beide Fehlererkennungssysteme jeweils auf eine einzelne Leitung V1 bezogene Fehler erfassen und melden. Derartige Fehlermeldungen werden beim nachfolgend beschriebenen Verfahren verwendet.

Nach dem Erfassen und Melden eines Fehlers einer der Leitungen bzw. Verbindungen V1 wird die jeweilige Verbindung von der Protokollschicht, die die physikalischen Leitungen zusammenfasst, z. B. IMA bei ATM oder, wie dargestellt, ML PPP bei IP-Datenübertragung, aus dem Bündel von Leitungen bzw. Verbindungen V1-V3 herausgenommen. Damit wird sichergestellt, dass keine Daten über die fehlerhafte Leitung bzw. Verbindung V1 übertragen werden und dadurch die gesamte Datenübertragung fehlerhaft werden würde. Gemäß der einfachsten Ausführungsform wird dabei natürlich die Gesamtdatenrate des Bündels von Verbindungen V1-V3 verringert.

Falls zusätzliche Leitungen bzw. Verbindungen V frei bzw. unbenutzt sind, kann eine solche Leitung als zusätzliche Leitung beziehungsweise Ersatzleitung in das verbleibende Bündel V2, V3 aufgenommen werden. Eine solche zusätzliche Leitung kann beispielsweise eine Leitung sein, die bei der Konfiguration der Schnittstelle V für eine bestimmte Datenübertragung als nicht-benutzte Leitung aus Redundanzgründen konfiguriert sein kann. Durch die Aufnahme einer solchen Leitung kann das Bündel von Leitungen die ursprüngliche Datenrate behalten bzw. zurückgewinnen.

Als besonders bevorzugtes Ausführungsbeispiel wird die in Fig. 1 dargestellte Konfiguration verwendet. Dabei handelt es sich um eine Mehrverbindungs-Punkt-zu-Punkt-Verbindung (ML PPP-Verbindung) über mehrere, beim vorliegenden Ausführungsbeispiel drei PCM30-Leitungen bzw. -Verbindungen V1-V3, wie sie bei der Übertragung von IP-Daten häufig verwendet wird. Nach dem Auftreten eines Fehlers auf der ersten Leitung bzw. Verbindung V1 wird dieser Fehler von den PCM30-Fehlererkennungsmechanismen im PCM30-PHY-Modul auf den beiden Seiten der Leitung V1 in vorzugsweise beiden Kommunikationssystemvorrichtungen BSC bzw. BS gleichzeitig erkannt und über eine entsprechende Verbindung dem Prozessor P mitgeteilt (1).

Auf der Empfängerseite, vorliegend beispielsweise der Basisstation BS, erkennt außerdem das der defekten Leitung V1 zugeordnete HDLC-Modul einen HDLC-Fehler, der über eine entsprechende Leitung dem zugeordneten Prozessor P in der Basisstation BS mitgeteilt wird (2).

Ferner kommen PPP-Echo-Mitteilung bzw. -Nachrichten, die die senderseitige Station, vorliegend die Basisstations-Steuereinrichtung BSC regelmäßig aussendet, nicht bei der empfängerseitigen Station BS an, was diese wiederum mit Hilfe des PPP-Moduls feststellt, wobei eine entsprechende Mitteilung über eine entsprechende Verbindung dem Prozessor P zugeleitet wird. Aufgrund der fehlenden PPP-Echo-Mitteilung sendet die Basisstation BS entsprechend auch kein Echo zurück, was wiederum von der Basisstations-Steuereinrichtung BSC in deren PPP-Modul festgestellt wird. Über eine entsprechende Verbindung erfolgt eine entsprechende Fehlermitteilung an den Prozessor P der Basisstations-Steuereinrichtung BSC.

Wie vorstehend aufgeführt, kann auf eine Vielzahl von Fehlererfassungs- und Fehlermitteilungssystemen zurückgegriffen werden, die einen Fehler auf einer einzelnen Leitung bzw. Verbindung V1 erfassen und an den zugeordneten Prozessor P der jeweiligen Kommunikationssystemvorrichtung BSC bzw. BS mitteilen. Theoretisch reicht bereits eine einzige dieser verschiedenen Fehlererfassungseinrichtungen zum Durchführen des hier beschriebenen Verfahrens aus.

Der Prozessor P nimmt jeweils die lokal, das heißt in seiner Kommunikationssystemvorrichtung BSC bzw. BS ermittelten Fehler auf und führt eine entsprechende Fehlerbehandlung durch bzw. veranlasst die entsprechenden weiteren Einrichtungen der Kommunikationsvorrichtungen BSC bzw. BS dazu, eine entsprechende Fehlerbehandlung vorzunehmen. Im vorliegenden Fall wird bei einer gestörten Verbindung V1 nach einer entsprechenden Mitteilung 1 - 3 an den Prozessor P die Leitung bzw. Verbindung V1 lokal und autonom aus dem ML PPP Bündel V1-V3 herausgenommen (4). Damit können sich Übertragungsfehler von der fehlerhaften Verbindung V1 nicht weiter negativ auf die Übertragungsqualität des verbleibenden Gesamtbündels V2 - V3 auswirken.

Zweckmäßigerweise, aber nicht zwingend erforderlich, kann eine entsprechende Mitteilung über die Herausnahme der Verbindung V1 aus dem Bündel von Verbindungen V1-V3 vom Prozessor P an eine andere, insbesondere übergeordnete Instanz oder Einrichtung des Kommunikationssystems übermittelt werden, um eine entsprechende Behandlung im Kommunikationssystem berücksichtigen zu können. Dazu zählen insbesondere Mitteilungen an einen Operator oder eine Wartungsdienststelle. Möglich ist aber auch eine Mitteilung an die gegenseitige, über die Schnittstelle V kommunizierende Kommunikationssystemvorrichtung, um weitere Maßnahmen auf höherer, übergeordneter Ebene koordinieren zu können.

Vorteilhaft ist insbesondere auch eine Steuerung durch den Prozessor P, welche die Hinzunahme einer weiteren, zuvor nicht benutzten Leitung bzw. Verbindung zu dem verbleibenden Bündel von Verbindungen V2, V3 ermöglicht. Gemäß einer besonders einfachen Ausführungsform kann es sich bei der hinzuzunehmenden Verbindung um eine bereits zuvor für solche Zwecke reservierte Leitung handeln. Gemäß aufwendigerer Ausführungsformen kann jedoch eine beliebige andere Leitung zum Bündel hinzugenommen werden, wobei in diesem Fall über z.B. die hinzuzunehmende Leitung bzw. Verbindung eine entsprechende Signalisierung zur Abstimmung mit der Gegenseite an der Schnittstelle V vorzunehmen ist.

## Patentansprüche

1. Verfahren zum Beheben von Fehlern beim Ausfall einzelner physikalischer Verbindungen (V1) bei Kommunikationsverbindungen mit mehreren physikalischen Verbindungen (V1-V3) zwischen zumindest zwei Kommunikationssystemvorrichtungen (BS bzw. BSC), bei dem
- Daten über zumindest zwei der physikalischen Verbindungen (V1-V3) übertragen werden,
- in den Kommunikationssystemvorrichtungen (BS bzw. BSC) die Verbindungen (V1-V3) hinsichtlich des Auftretens von Fehlern und/oder Ausfällen überwacht werden und
- im Fall eines Verbindungsfehlers bzw. Ausfalls eine Deaktivierung der fehlerhaften Verbindung (V1) bzw. fehlerhaften Verbindungen durchgeführt wird,
**dadurch gekennzeichnet dass**
- im Fall eines Verbindungsfehlers bzw. Ausfalls in den zumindest zwei Kommunikationssystemvorrichtungen (BS bzw. BSC) veranlasst wird, dass keine Daten aus höheren Schichten (IP) über die fehlerhafte/n physikalische/n Verbindung/en (PCM30-PHY) übertragen werden, wobei eine Deaktivierung der fehlerhaften Verbindung (V1) ohne einen deaktivierungsbezogenen Protokollaustausch zwischen den Kommunikationssystemvorrichtungen (BS, BSC) oder weiteren, insbesondere übergeordneten Kommunikationssystemvorrichtungen durchgeführt wird.

2. Verfahren nach Anspruch 1, bei dem
nicht fehlerhafte Verbindungen (V2, V3) zur Übertragung der Daten ohne Änderung der auf diese bezogenen allgemeinen Verfahrensweise weiter verwendet werden.

3. Verfahren nach Anspruch 1 oder 2, bei dem
eine Deaktivierung der fehlerhaften Verbindungen (V1) innerhalb zumindest einer der Kommunikationssystemvorrichtungen (BSC, BS) durchgeführt wird.

4. Verfahren nach einem vorstehenden Anspruch, bei dem
auf der physikalischen Ebene (PCM30-PHY) ein Verbindungsfehler erfasst und daraufhin die Nicht-Übertragung von Daten über die fehlerhafte physikalische Verbindung (V1; PCM30-PHY) veranlasst wird.

5. Verfahren nach einem vorstehenden Anspruch, bei dem
auf der Protokoll-Ebene (PPP; HDLC) ein Verbindungsfehler erfasst und daraufhin die Nicht-Übertragung von Daten über die fehlerhafte physikalische Verbindung (V1; PCM30-PHY) veranlasst wird.

6. Verfahren nach einem vorstehenden Anspruch, bei dem
auf der auf der untersten Protokoll-Ebene (HDLC) ein Verbindungsfehler erfasst und daraufhin die Nicht-Übertragung von Daten über die fehlerhafte physikalische Verbindung (V1; PCM30-PHY) veranlasst wird.

7. Kommunikationssystemvorrichtung (BS, BSC) mit
- einer Schnittstelle (V) mit einer Vielzahl von physikalischen Leitungen für den Aufbau von physikalischen Datenverbindungen (V1-V3) zu zumindest einer anderen, über die Schnittstelle (V) angeschlossenen Kommunikationssystemvorrichtung (BSC bzw. BS),
- einem Prozessor (P) in der Kommunikationssystemvorrichtung (BS, BSC) zum Steuern und Verwalten der Schnittstelle (V) und der Datenverbindungen (V1-V3) darauf, wobei Daten aufgeteilt über mehrere der Datenverbindungen (V1-V3) übertragen werden,
- einer Überwachungseinrichtung (PCM30-PHY; HDLC; PPP; P) zum Überwachen der Datenverbindungen (V1-V3),
**dadurch gekennzeichnet dass**
- der Prozessor (P) zum Durchführen eines Verfahrens nach einem der vorstehenden Ansprüche und zum eigenständigen Deaktivieren einzelner oder aller Datenverbindungen (V1) nach Erfassen eines entsprechenden Fehlers darauf durch die entsprechende Überwachungseinrichtung (PCM30-PHY; HDLC; PPP; P) eingerichtet ist.

## Claims

1. Method for rectification of faults in the event of failure of individual physical connections (V1) in communication connections having two or more physical connections (V1-V3) between at least two communications system apparatuses (BS and BSC), in which
- data is transmitted via at least two of the physical connections (V1-V3),
- the connections (V1-V3) in the communications system apparatus (BS and BSC) are monitored for the occurrence of faults and/or failures, and
- in the event of a connection fault or failure, the faulty connection (V1) or faulty connections is or are deactivated,
**characterized in that**
- in the event of a connection fault or failure in the at least two communications system apparatuses (BS and BSC), this results in no data being transmitted from higher layers (IP) via the faulty physical connection or connections (PCM30-PHY), with the faulty connection (V1) being deactivated without any deactivation-related protocol interchange between the communications system apparatuses (BS, BSC) or further, in particular higher-level, communications system apparatuses.

2. Method according to Claim 1, in which
sound connections (V2, V3) are still used for transmission of the data without any change to the general procedure relating to this.

3. Method according to Claim 1 or 2, in which
the faulty connections (V1) are deactivated within at least one of the communications system apparatuses (BSC, BS).

4. Method according to a preceding claim, in which
a connection fault is detected at the physical level (PCM30-PHY), and no data is then transmitted via the faulty physical connection (VI; PCM30-PHY).

5. Method according to a preceding claim, in which
a connection fault is detected at the protocol level (PPP; HDLC), and no data is then transmitted via the faulty physical connection (VI; PCM30-PHY).

6. Method according to a preceding claim, in which
a connection fault is detected at the lowermost protocol level (HDLC), and no data is then transmitted via the faulty physical connection (V1; PCM30-PHY).

7. Communications system apparatus (BS, BSC) having
- an interface (V) with a large number of physical lines for setting up physical data connections (V1-V3) to at least one other communications system apparatus (BSC or BS) which is connected via the interface (V),
- a processor (P) in the communications system apparatus (BS, BSC) for controlling and administering the interface (V) and the data connections (V1-V3) with data being transmitted subdivided between two or more of the data connections (V1-V3),
- a monitoring device (PCM30-PHY; HDLC; PPP; P) for monitoring the data connections (V1-V3),
**characterized in that**
- the processor (P) is designed to carry out a method according to one of the preceding claims and for autonomous deactivation of individual data connections (V1) or all of the data connections (V1) after detection of a corresponding fault by means of the corresponding monitoring device (PCM30-PHY; HDLC; PPP; P).

## Revendications

1. Procédé de correction d'erreur en cas de défaillance de liaisons physiques individuelles (V1) lors de liaisons de communication avec plusieurs liaisons physiques (V1-V3) entre au moins deux dispositifs de système de communication (BS resp. BSC), dans lequel
- des données sont transmises par le biais d'au moins deux des liaisons physiques (V1-V3),
- les liaisons font l'objet d'une surveillance dans les dispositifs de système de communication (BS resp. BSC) quant à la survenue d'erreurs et/ou de défaillances et
- une désactivation de la liaison défectueuse (V1) resp. des liaisons défectueuses a lieu en cas d'erreur de liaison resp. de défaillance,
**caractérisé en ce que**
- en cas d'erreur de liaison resp. défaillance, on fait en sorte que, dans les au moins deux dispositifs de système de communication (BS resp. BSC), aucune donnée de couches supérieures (IP) ne soit transmise par le biais de la/des liaison/s physique/s défectueuse/s (PCM30-PHY), une désactivation de la liaison défectueuse (V1) étant exécutée sans qu'un échange au niveau protocole en rapport avec cette désactivation ait lieu entre les dispositifs de système de communication (BS, BSC) ou d'autres dispositifs de système de communication, notamment de rang supérieur.

2. Procédé selon la revendication 1, dans lequel des liaisons non défectueuses (V2, V3) continuent à être utilisées pour la transmission de données sans modification de la procédure générale les concernant.

3. Procédé selon la revendication 1 ou 2, dans lequel une désactivation des liaisons défectueuses (V1) a lieu à l'intérieur d'au moins un des dispositifs de système de communication (BSC, BS).

4. Procédé selon l'une des revendications précédentes, dans lequel une erreur de liaison est saisie au niveau physique (PCM30-PHY), suite à quoi la non-transmission de données par le biais de la liaison physique défectueuse (V1 ; PCM30-PHY) est induite.

5. Procédé selon l'une des revendications précédentes, dans lequel une erreur de liaison est saisie au niveau des protocoles (PPP ; HDLC), suite à quoi la non-transmission de données par le biais de la liaison physique défectueuse (V1 ; PCM30-PHY) est induite.

6. Procédé selon l'une des revendications précédentes, dans lequel une erreur de liaison est saisie au niveau de protocole le plus bas (HDLC), suite à quoi la non-transmission de données par le biais de la liaison physique défectueuse (V1 ; PCM30-PHY) est induite.

7. Dispositif de système de communication (BS, BSC), comprenant
- une interface (V) avec une pluralité de lignes physiques pour l'établissement de liaisons de données physiques (V1-V3) vers au moins un autre dispositif de système de communication (BSC resp. BS) connecté par le biais de l'interface (V),
- un processeur (P) dans le dispositif de système de communication (BS, BSC) pour commander et gérer l'interface (V) et les liaisons de données (V1-V3) sur cette dernière, des données étant réparties pour être transmises par le biais de plusieurs des liaisons de données (V1-V3),
- un dispositif de surveillance (PCM30-PHY ; HDLC ; PPP ; P) pour surveiller les liaisons de données (V1-V3),
**caractérisé en ce que**
- le processeur (P) est aménagé pour exécuter un procédé selon l'une des revendications précédentes et pour désactiver de manière autonome des liaisons de données individuelles ou toutes les liaisons de données (V1) après la saisie par le dispositif de surveillance correspondant (PCM30-PHY ; HDLC ; PPP ; P) d'une erreur correspondante sur ces liaisons de données.
